# EUROPEAN PATENT APPLICATION

(11) **EP 4 393 576 A1**
(43) Date of publication of application: **03.07.2024**
(21) Application number: 23214713.2
(22) Date of filing: 06.12.2023
(51) Int. Cl.: B01J 2/12, B05B 13/02, B05B 15/50, B08B 7/02

(54) **GRANULATING APPARATUS WITH DISPENSING DEVICE**

(30) Priority: 30.12.2022 IT 202200027402
(71) Applicant: L.B. Officine Meccaniche S.p.A., 41042 Fiorano Modenese (Modena) (IT)
(72) Inventor: CAVANI, Giuseppe, 41043 Formigine, Modena (IT); FANTI, Corrado, 42123 Reggio Emilia (IT)
(74) Representative: Luppi Intellectual Property S.r.l.

(57) **Abstract**

A dispensing device with at least one dispensing unit is disclosed that carries one or more nozzles configured to dispense a fluid, and with a deformable wall that covers at least one part of said at least one dispensing unit and which bounds a cavity that is connectable to a pressurized gas source to enable said deformable wall to be inflated and/or deflated cyclically in order to detach possible encrusting material deposited on the wall itself; the dispensed fluid can be a granulating fluid that is sprayed on powder material to perform a granulating process.

## Description

### Technical field of the invention

The invention relates to a dispensing device suitable for dispensing a fluid, in particular a liquid (for example a liquid solution or a suspension). The dispensing device can be usable, in particular, for spraying a granulating fluid in the context of a granulating process. The invention further relates to a granulating apparatus that includes the aforesaid dispensing device and a granulating method that uses the aforesaid dispensing device.

Specifically, but not exclusively, the invention can be applied to the preparation of a granular product intended for pressing, in particular a ceramic granular product intended for forming ceramic tiles.

The ceramic granular product can be obtained, for example, by a powder granulating process inside a granulating apparatus where the dispensing device dispenses a granulating fluid consisting of slip.

The invention can be applied both in the ceramics industry, and in other industries like, for example, in the production of fertilizers, pet-food, etc.

### Background of the invention

As known, in a granulating process the particles of powder material are treated to form particles of greater dimensions (granules) in general in order to improve the flowability of the material. It is also known that in the ceramics industry granulation, in addition to improving the flowability of the ceramic material to be pressed, promotes the evacuation of the air during the step of pressing and, consequently, enables homogeneous compacting of the ceramic product to be obtained.

In various technological sectors, granulating apparatuses are known that are provided with a device for dispensing the granulating fluid. The prior art comprises dispensing devices with nozzles configured to spray the granulating fluid onto powder material inside a granulating chamber where the powder material mixture and granulating fluid is processed to cause the aggregation of the powder particles and where, in general it is subjected to a turbulent movement (for example by fluidization or by mixing with mechanical stirrers).

One of the problems of the prior art is that the granulating chamber contains particle material moving chaotically and irregularly, with the consequent risk (especially in the case of a wet granulating process) of the formation of an undesired deposit of encrusting material above the dispensing device.

### Summary of the invention

One object of the invention is to make available a suitable solution for overcoming the aforesaid drawback of the prior art.

One object of the invention is to propose an alternative dispensing device to those of the prior art.

One object of the invention is to provide a granulating apparatus and/or a granulating method that are alternative to the methods of the prior art.

One advantage is easily detaching the encrusting material that may become have deposited on the dispensing device.

One advantage is to protect the dispensing device in addition to increasing the working life thereof and facilitating cleaning thereof.

One advantage is to make a constructionally simple and cheap device for dispensing a fluid, in particular a granulating fluid.

Such objects and advantages, and still others, are achieved by a granulating apparatus and/or by a granulating method according to one or more of the claims set out below.

In one embodiment, a dispensing device comprises at least one dispensing unit that carries one or more nozzles configured to dispense a fluid, and at least one deformable wall that covers at least one part of the dispensing unit and which bounds a cavity that is connectable to a pressurized gas source to enable the deformable wall to be inflated and/or deflated cyclically, in order to detach possible encrusting material that becomes deposited on the wall. The dispensed fluid can be a granulating fluid sprayed onto powder material to perform a granulating process.

### Brief description of the drawings

The invention can be better understood and implemented with reference to the attached drawings that illustrate one embodiment thereof by way of non-limiting example, in which:
Figure 1 is a diagram of one embodiment of a granulating apparatus;
Figure 2 is a vertical raised side view of an embodiment of a dispensing device made according to the present invention and usable in a granulating apparatus, for example like the apparatus of Figure 1;

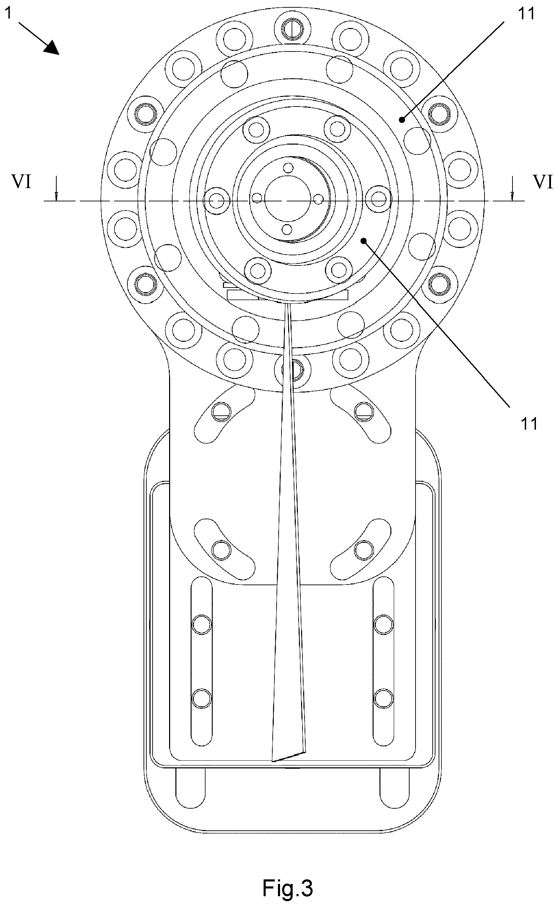

Figure 3 is a right-side view of Figure 2;
Figure 4 is a longitudinal section, according to a vertical section plane, of the dispensing device of Figure 2;

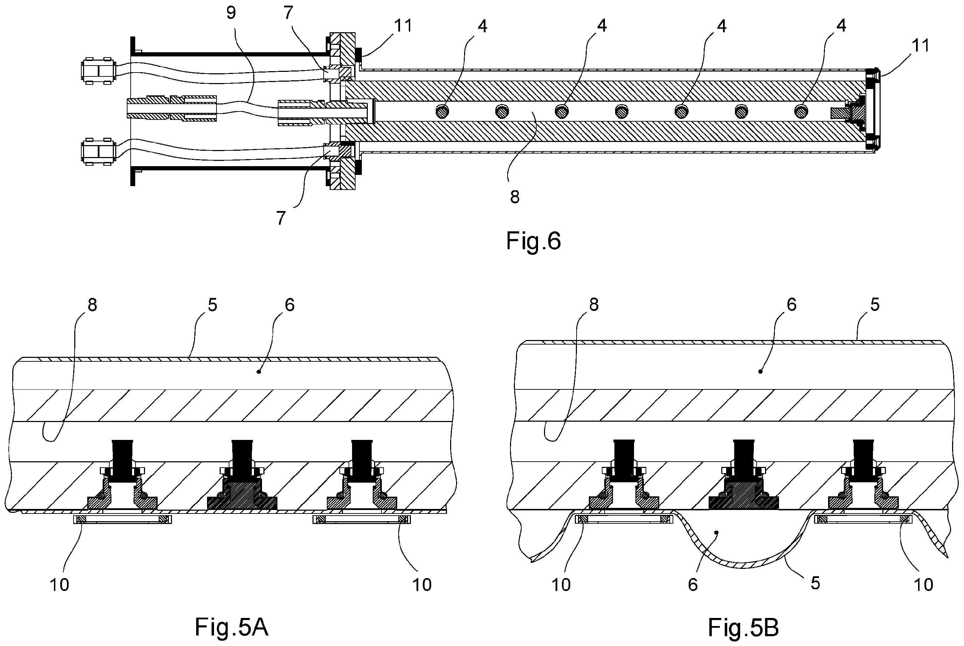

Figure 5A shows an enlarged detail of Figure 4;
Figure 5B shows the detail of Figure 5A in which the deformable wall 5 is in an inflated configuration;
Figure 6 is a section according to the plane of section VI-VI of Figure 3;
Figure 7 is a section according to the plane of section VII-VII of Figure 4.

### Detailed description

With reference to the attached figures, a dispensing device suitable for dispensing a fluid has been indicated overall with 1. The fluid can be, in particular, a liquid, for example a liquid solution or a suspension.

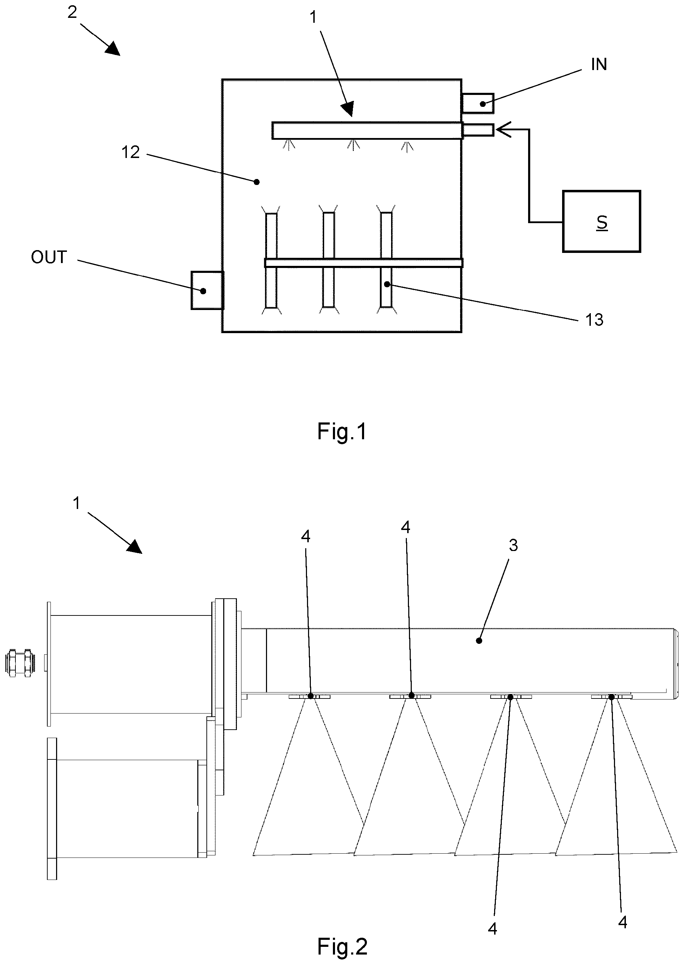

The dispensing device 1 may be usable, in particular, for spraying a granulating fluid in the context of a granulating process. The dispensing device 1 may be used, in particular, in preparing a granular product intended for pressing like, for example, a ceramic granular product intended for forming ceramic tiles. The ceramic granular product may be obtained, for example, with a powder granulating process performed inside a granulating apparatus 2 (see embodiment in Figure 1) where the dispensing device 1 dispenses a granulating fluid, in particular consisting of slip.

The dispensing device 1 comprises at least one dispensing unit 3 with one or more nozzles 4 configured to dispense the fluid.

The dispensing device 1 comprises a deformable wall 5 that covers at least one part of the dispensing unit 3. The deformable wall 5 bounds a cavity 6 connectable to a pressurized gas source (not illustrated) to enable the deformable wall 5 to be inflated. The dispensing device 1 may comprise, in particular, the pressurized gas source connected to the cavity 6. The pressurized gas source may comprise, in particular, a compressor connected to the cavity 6 through a pneumatic circuit (not shown) at the head of one or more connectors 7 communicating with the cavity 6.

The deformable wall 5 may comprise, in particular, an elastic wall made of elastomeric material, as in this embodiment. In other embodiments, the deformable wall may comprise, in particular, a yielding or loose wall.

The deformable wall 5 may comprise, in particular, a tubular wall arranged around the dispensing unit 3.

The dispensing device 1 may comprise, in particular, a source S of a granulating fluid (for example slip) connected to the nozzle/s 4. Each nozzle 4 is configured to spray the granulating fluid.

In the specific embodiment, the dispensing device 1 comprises a plurality of nozzles 4 (for example four nozzles 4). The nozzles 4 may be arranged, in particular, in a row along a longitudinal axis. The dispensing unit 3 may comprise, in particular, a manifold duct 8 configured to supply the fluid to the nozzles 4. The manifold duct 8 can, in particular, extend along the longitudinal axis. The nozzles 4 may be, in particular, carried by the manifold duct 8. The manifold duct 8 may be connected to the source S of a granulating fluid through at least one pipe 9.

The deformable wall 5 may comprise, in particular, a tubular wall extending along the aforesaid longitudinal axis and arranged around the manifold duct 8.

The deformable wall 5 may comprise, in particular, a wall pierced with a hole at each nozzle 4. It is possible to provide, in particular, a pneumatic seal fixing system 10 arranged at each nozzle 4 and around each hole to fix the deformable wall 5 to a wall of the dispensing unit 3. Each pneumatic seal fixing system 10 may comprise, in particular, an annular element fixed to the dispensing unit 3 by screw fixing means.

It is possible, as in the illustrated embodiment, for the number of nozzles to be greater than the active nozzles 4, i.e. for one or more inactive nozzles to be arranged along the manifold duct 8 (for example, active nozzles 4 alternating with inactive nozzles, in particular, in the specific embodiment, four active nozzles 4 alternating with three inactive nozzles). The deformable wall 5 will be pierced only at the active nozzles 4.

The deformable wall 5 may comprise two end portions each of which is fixed in a pneumatically sealed manner to the dispensing unit 3, for example by two fixing flanges 11 (in particular with screw fixing means).

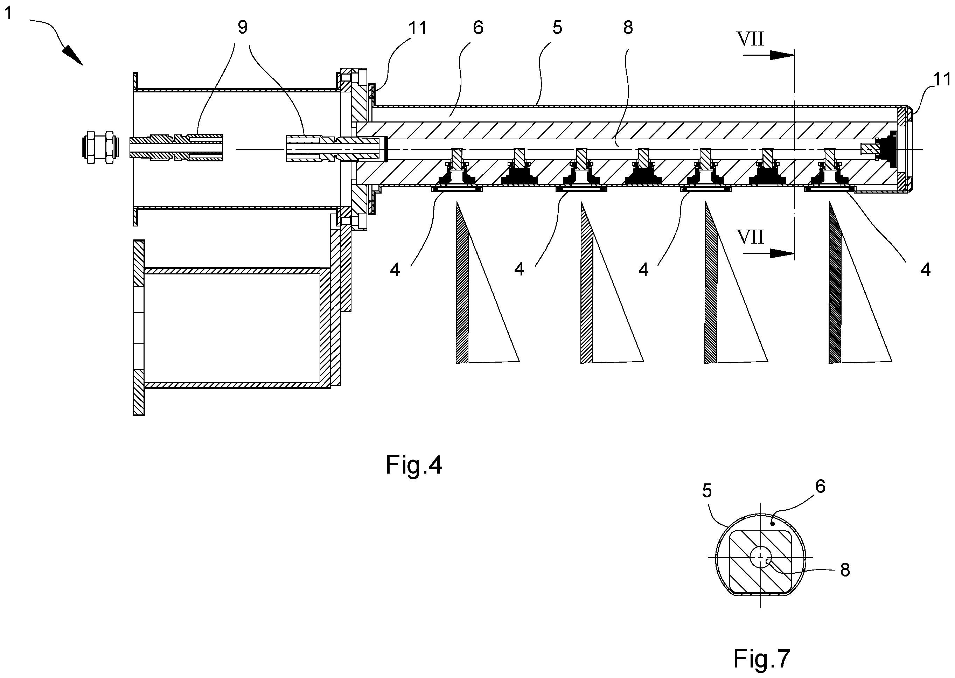

The cavity 6 may comprise, in particular, at least one chamber bounded externally by the deformable wall 5 and bounded internally by a wall of the dispensing unit 3, in particular by a wall of the manifold duct 8. The aforesaid wall of the manifold duct 8 may have, in particular, as in the specific embodiment illustrated here), a straight cross section of rectangular shape (see Figure 7).

Figure 1 shows, schematically, one embodiment of a granulating apparatus 2 that can use the dispensing device 1. The granulating apparatus 2 comprises a granulating chamber 12 inside which the dispensing device 1 can spray the granulating fluid. In this embodiment, the granulating apparatus 2 comprises a mechanical stirrer 13 (for example a rotating stirrer, in particular a stirrer with radial blades) to mix the particle material contained in the granulating chamber 12. In other embodiments that are not illustrated the dispensing device 1 may be used in a granulating apparatus of another type, for example of the fluid bed type, or of yet another type.

A granulating method comprises the step of introducing powder material into the granulating chamber 12. The granulating chamber 12 may comprise, in particular, at least one inlet IN of the material to be processed and at least one outlet OUT of the processed material. The granulating method comprises the step of spraying the granulating fluid onto the powder material by the dispensing device 1. The granulating method comprises the step of inflating and/or deflating the deformable wall 5 for detaching possible material (for example the material formed by mixing the powder material with the granulating fluid) deposited on the wall.

The deformable wall 5 may be inflated and deflated cyclically several times, for example according to a preset work cycle and governed by (electronic and programmable) control means with which the dispensing device 1 is equipped.

The granulating method may comprise, in particular, the step of connecting the cavity 6 to the pressurized gas source to enable the aforesaid step of inflating and/or deflating the deformable wall 5 to be performed.

Legend:
- 1: Dispensing device
- 2: Granulating apparatus
- 3: Dispensing unit
- 4: Nozzles
- 5: Deformable wall
- 6: Cavity
- 7: Connectors
- 8: Manifold duct
- 9: Pipe
- 10: Fixing systems
- 11: Fixing flanges
- 12: Granulating chamber
- 13: Mechanical stirrer
- S: Source of the granulating fluid

## Claims

1. Granulating apparatus, comprising a granulating chamber (12) and a dispensing device (1) for spraying a granulating fluid into said granulating chamber (12), said dispensing device (1) comprising at least one dispensing unit (3) with one or more nozzles (4) configured to dispense a fluid, and a deformable wall (5) which covers at least a part of said at least one dispensing unit (3) and which bounds a cavity (6) connectable to a pressurized gas source to allow inflating said deformable wall (5).

2. Apparatus according to claim 1, wherein said deformable wall (5) comprises an elastic wall made of elastomeric material.

3. Apparatus according to claim 1 or 2, wherein said deformable wall (5) has a tubular shape around said at least one dispensing unit (3).

4. Apparatus according to any one of the preceding claims, comprising a pressurized gas source connected to said cavity (6); said pressurized gas source comprising, in particular, a compressor.

5. Apparatus according to any one of the preceding claims, comprising a source (S) of a granulating fluid connected to said one or more nozzles (4) which are configured to spray the granulating fluid.

6. Apparatus according to any one of the preceding claims, wherein said one or more nozzles (4) comprises at least two nozzles (4).

7. Apparatus according to claim 6, wherein said at least two nozzles (4) are arranged in a row along a longitudinal axis, said at least one dispensing unit (3) comprising a manifold duct (8) which is configured to feed the fluid to said at least two nozzles (4) and which extends along said longitudinal axis, said at least two nozzles (4) being carried by said manifold duct (8).

8. Apparatus according to claim 7, wherein said deformable wall (5) has a tubular shape extending along said longitudinal axis around said manifold duct (8) and is perforated at said at least two nozzles (4).

9. Apparatus according to any one of the preceding claims, wherein said cavity (6) comprises at least one chamber delimited externally by said deformable wall (5) and internally by a wall of said dispensing unit (3).

10. Granulating method, comprising the following steps:
- introducing powder material into a granulating chamber (12),
- spraying a granulating fluid onto said powder material by means of a dispensing device (1) comprising at least one dispensing unit (3) with one or more nozzles (4) configured to dispense a fluid, and a deformable wall (5) which covers at least a part of said at least one dispensing unit (3), and
- inflating and/or deflating said deformable wall (5) to detach any material deposited on the wall itself.

11. Method according to claim 10, wherein said deformable wall (5) is cyclically inflated and deflated several times.

12. Method according to claim 10 or 11, wherein said deformable wall (5) bounds a cavity (6) connectable to a pressurized gas source to allow inflating said deformable wall (5), said method comprising the step of connecting said cavity (6) to a pressurized gas source to allow carrying out said step of inflating and/or deflating said deformable wall (5).
